# EUROPÄISCHE PATENTSCHRIFT

(11) **EP 0 619 494 B1**
(45) Veröffentlichungstag und Bekanntmachung des Hinweises auf die Patenterteilung: **21.05.1997**
(21) Anmeldenummer: 94103620.4
(22) Anmeldetag: 09.03.1994
(51) Int. Cl.: G01P 15/08

(54) **Tunneleffekt-Beschleunigungssensor**
Electron tunneling accelerometer
Accéléromètre à effet tunnel

(30) Priorität: 05.04.1993 DE 4311123
(43) Veröffentlichungstag der Anmeldung: 12.10.1994
(73) Patentinhaber: SIEMENS AKTIENGESELLSCHAFT, 80333 München (DE)
(72) Erfinder: Biebl, Markus, Dipl.-Phys., D-81543 München (DE); Scheiter, Thomas, Dipl.-Ing., D-80469 München (DE); Klose, Helmut, Dr., D-81929 München (DE)

(56) Entgegenhaltungen:
- US-A- 4 638 669
- J. VAC. SCI. TECHNOL A, Bd.10, Nr.4, 1. Juli 1992, NEW YORK Seiten 2114 - 2118, XP296388 KENNY ET AL 'ELECTRON TUNNEL SENSORS'
- IBM TECH. DISCL. BULL., Bd.32, Nr.12, 1. Mai 1990, NEW-YORK Seiten 49 - 51, XP105074 'SELF-CONTROLLED MICROMECHANICAL SCANNING TUNNELING MICROSCOPY SENSOR'

## Beschreibung

Die vorliegende Erfindung betrifft einen Beschleunigungssensor nach dem Prinzip des Tunneleffekts in Polysilizium.

In den Veröffentlichungen von T.W. Kenny e.a. in Appl. Phys. Lett. 58, 100 bis 102 (1991) und in J. Vac. Sci. Technol. A 10 (4), 2114 bis 2118 (1992) sind Tunneleffekt-Beschleunigungssensoren beschrieben, bei denen auf Silizium durch Unterätzen federnd verankerte freitragende Balken oder Rechtecke mit einer zum Substrat weisenden Spitze über Gegenelektroden angebracht sind. Mit diesen Sensoren kann eine Auslenkung des federnden Teiles infolge von Trägheitskräften bei Beschleunigungen festgestellt werden. Bei einigen der Ausführungsformen sind Elektroden an den beweglichen Teilen und am Substrat vorgesehen, mit denen eine Auslenkung des beweglichen Teiles kompensiert werden kann. Diese Sensoren werden durch Unterätzen an der Oberfläche eines kompakten Siliziumblockes hergestellt.

Aufgabe der vorliegenden Erfindung ist es, einen einfach herzustellenden Tunneleffekt-Beschleunigungssensor und ein zugehöriges Herstellungsverfahren anzugeben.

Diese Aufgabe wird mit dem Beschleunigungssensor mit den Merkmalen des Anspruches 1 bzw. mit dem Herstellungsverfahren des Anspruches 3 gelöst. Weitere Ausgestaltungen ergeben sich aus den abhängigen Ansprüchen.

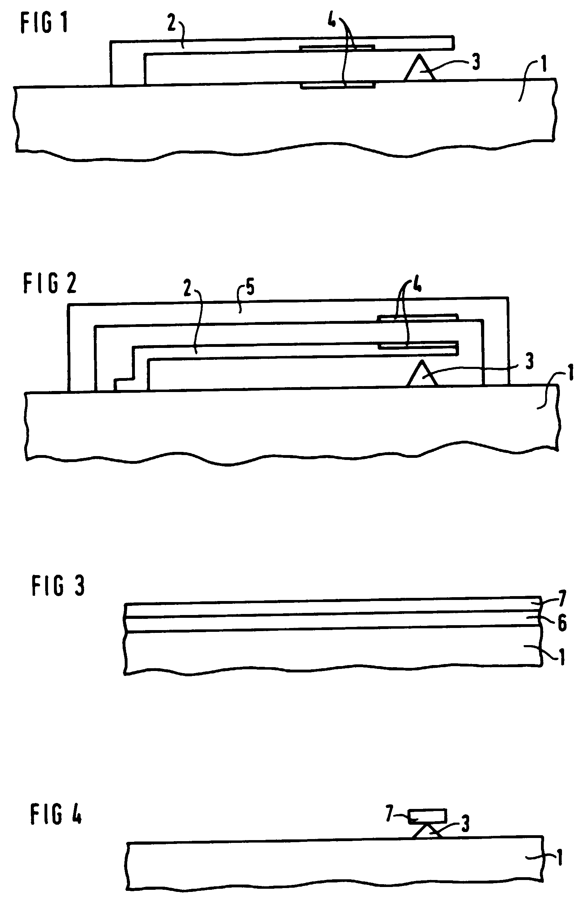

Der erfindungsgemäße Sensor besteht aus einem federnd verankerten Balken aus Polysilizium über einem Siliziumsubstrat. Die für den Tunneleffekt erforderliche Spitze ist an der Oberfläche des Substrates ausgebildet und weist zu dem Polysiliziumbalken hin. Elektroden sind vorhanden, um durch Anlegen geeigneter Potentiale elektrostatisch Auslenkungen des Balkens zu kompensieren. Es folgt eine Beschreibung des erfindungsgemäßen Sensors und des zugehörigen Herstellungsverfahrens anhand der Figuren 1 bis 8.
- Fig. 1 und 2: zeigen Ausführungsbeispiele des erfindungsgemäßen Sensors im Querschnitt.
- Fig. 3 bis 8: zeigen den Sensor des Ausführungsbeispieles der Fig. 2 im Querschnitt nach verschiedenen Schritten des Herstellungsverfahrens.

Bei dem Sensor der Fig. 1 ist auf einem Siliziumsubstrat 1 ein elektrisch leitfähig dotierter Balken 2 aus Polysilizium an einem Ende befestigt. Der Balken ist auf diese Weise biegefähig verankert. Falls das Siliziumsubstrat 1 senkrecht zu der mit dem Balken 2 versehenen Oberfläche beschleunigt wird, verbiegt sich dieser Balken 2 infolge seiner Trägheit. Diese Verbiegung ist von der Größe der Beschleunigung abhängig und wird unter Ausnutzung des Tunneleffektes gemessen. Zu diesem Zweck befindet sich unterhalb des Balkens 2 eine zum Balken hinweisende Spitze 3 aus Silizium, z. B. Polysilizium. Durch Dotieren hergestellte Elektroden 4 dienen dazu, die Verbiegung des Balkens 2 durch Anlegen geeigneter Potentiale elektrostatisch zu kompensieren. Die dazu nötige elektrische Spannung ist ein direktes Maß für die auftretende Beschleunigung. Der Tunnelstrom zwischen dem Balken 2 und der Spitze 3 wird dadurch auf einem stets konstanten Wert gehalten. Da schon geringste Verbiegungen des Balkens zu einer großen Änderung des Tunnelstroms führen, ist diese Methode geeignet, Beschleunigungen mit einer Genauigkeit zu messen, die in den Bereich von 1 millionstel Erdbeschleunigung reicht. Durch die Kompensation der Trägheit des Balkens wie oben beschrieben lassen sich Beschleunigungen bis zu dem Hundertfachen der Erdbeschleunigung messen. Auf diese Weise wird ein extrem großer Meßbereich realisiert.

Bei der Ausführungsform der Fig. 2 befindet sich der Balken 2 in einem von einer Polysiliziumschicht 5 gebildeten Hohlraum. Die Elektroden 4 befinden sich in dieser Polysiliziumschicht 5 und an der dem Siliziumsubstrat 1 abgewandten Seite des Balkens 2. Der Hohlraum unter der Polysiliziumschicht 5 kann evakuiert sein. Die Elektroden der genannten Ausführungsbeispiele können jeweils zusätzlich mit Metallisierungen versehen sein.

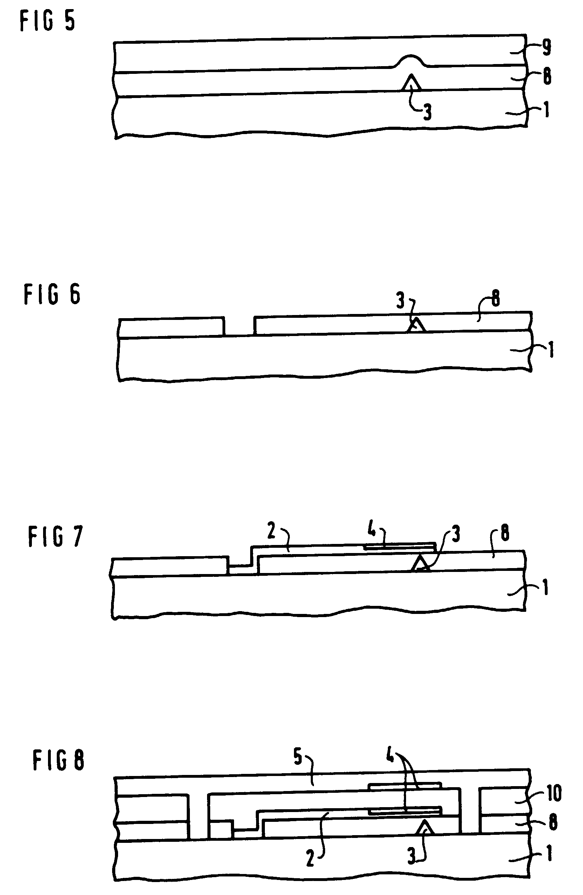

Ein Herstellungsverfahren für die in Fig. 2 dargestellte Ausführungsform wird jetzt anhand der Figuren 3 bis 8 beschrieben. Auf ein Siliziumsubstrat 1 werden übereinander ganzflächig eine erste Schicht 6 aus Polysilizium und eine zweite Schicht 7 aus einem anderen Material aufgebracht. Polysilizium muß bezüglich dieses anderen Materiales selektiv ätzbar sein. Für das Material der zweiten Schicht 7 kommt z. B. ein Oxid oder Nitrid (z. B. SiO₂ oder Si₃N₄) in Frage. Diese Schichten werden strukturiert, so daß nur ein abgedeckter Quader aus Polysilizium an der Stelle der herzustellenden Spitze übrig bleibt. Die erste Schicht 6 wird durch selektives naßchemisches Unterätzen der zweiten Schicht 7 bis auf eine Spitze 3 (s. Fig. 4) entfernt. Der restliche Anteil der zweiten Schicht 7 wird entfernt. Die Spitze 3 aus Polysilizium kann eventuell mit einer Metallisierung aus z. B. Wolfram versehen werden. Danach wird ganzflächig eine Hilfsschicht 8 (z. B. SiO₂) und darauf eine planarisierende Schicht 9 abgeschieden, so daß sich die Schichtstruktur der Fig. 5 ergibt. Als planarisierende Schicht kommt z. B. BPSG (Borphosphorsilikatglas) in Frage. Dieses BPSG wird nach dem ganzflächigen Aufbringen durch Erwärmen zum Verfließen gebracht. Damit ergibt sich die planare Oberfläche. Die Schichtfolge der Figur 5 wird dann gleichmäßig zurückgeätzt, wobei z. B. mittels Laserinterferometrie die jeweilige Schichtdicke während des Ätzens bestimmt wird. Dadurch wird erreicht, daß wie in Fig. 6 gezeigt die Hilfsschicht 8 durch das Ätzen freigelegt und so weit rückgeätzt wird, daß die Spitze 3 soeben bedeckt bleibt. Auf diese Weise wird der geringe Abstand der Spitze 3 zu dem herzustellenden Balken aus Polysilizium festgelegt. Dieser Balken wird nachfolgend hergestellt, indem ganzflächig eine Schicht aus Polysilizium aufgebracht wird, die nach dem Dotieren für die Ausbildung einer Elektrode 4 (s. Fig. 7) bis auf einen verankerten Balken 2 entfernt wird. Die Hilfsschicht 8 kann jetzt entfernt werden, so daß man das Ausführungsbeispiel der Fig. 1 erhält. Eine andere Möglichkeit besteht darin, eine weitere Hilfsschicht 10 (s. Fig. 8) ganzflächig auf die Struktur der Fig. 7 aufzubringen. Die Hilfsschichten werden strukturiert und dann eine Polysiliziumschicht 5 zunächst ganzflächig aufgebracht und dann bis auf den verbleibenden Anteil entsprechend dem Ausführungsbeispiel der Fig. 2 entfernt. Die Hilfsschicht 8 und die weitere Hilfsschicht 10 unter der Polysiliziumschicht 5 werden z. B. durch Ätzkanäle entfernt, wonach die Polysiliziumschicht 5 evakuiert und durch Verschließen der Ätzkanäle versiegelt werden kann. Eine vorteilhafte Ausführungsform ergibt sich, wenn vor dem Rückätzen der Polysiliziumschicht 5 durch Dotieren eine Elektrode 4 oberhalb der in dem Balken 2 ausgebildeten Elektrode 4 hergestellt wird.

Die Herstellung des erfindungsgemäßen Sensors erfolgt in Prozeßschritten der Mikromechanik, die mit der Technologie der Herstellung von integrierten Schaltungen kompatibel sind. Das hat den Vorteil, daß eine Regel- und Auswerteelektronik als elektronische Schaltung zusammen mit dem Sensor in dem Siliziumsubstrat 1 integriert werden kann und damit Genauigkeit und Signal-Rausch-Verhältnis des Sensors wesentlich verbessert werden. Vorteile des erfindungsgemäßen Sensors sind hohe Genauigkeit, extrem großer Meßbereich, äußerst geringe Empfindlichkeit bei Querbeschleunigungen, Störunanfälligkeit wegen der integrierten Auswerteschaltung, kleine Abmessungen, geringes Gewicht und gute Integrierbarkeit mit weiteren elektronischen oder mechanischen Komponenten.

## Patentansprüche

1. Beschleunigungssensor auf einem Siliziumsubstrat (1),
auf dem ein elektrisch leitfähig dotierter Balken (2) aus Polysilizium biegefähig verankert ist und
auf dem unter diesem Balken (2) eine auf den Balken (2) gerichtete, elektrisch leitfähig dotierte Spitze (3) aus Polysilizium so dicht benachbart zu dem Balken (2) angeordnet ist, daß zwischen dieser Spitze (3) und dem Balken (2) der Tunneleffekt auftritt,
wobei Elektroden (4) für elektrostatische Kompensation von auf den Balken (2) einwirkender Trägheitskraft vorgesehen sind.

2. Beschleunigungssensor nach Anspruch 1,
bei dem sich der Balken (2) in einem von einer Polysiliziumschicht (5) umgebenen Hohlraum befindet und
bei dem die Elektroden (4) an dem Balken (2) und an dieser Polysiliziumschicht (5) einander gegenüberliegend ausgebildet sind.

3. Verfahren zur Herstellung eines Beschleunigungssensors nach Anspruch 1,
bei dem in einem ersten Schritt auf ein mit einer strukturierten Dotierung versehenes Siliziumsubstrat (1) eine erste Schicht (6) aus Polysilizium und darauf eine zweite Schicht (7) aus einem anderen Material aufgebracht werden,
bei dem in einem zweiten Schritt diese beiden Schichten (6, 7) so strukturiert werden, daß
in einem dritten Schritt als Ergebnis naßchemischen Unterätzens von der ersten Schicht (6) eine Spitze (3) übrig bleibt, bei dem in einem vierten Schritt ganzflächig eine Hilfsschicht (8) und eine planarisierende Schicht (9) aufgebracht werden,
bei dem in einem fünften Schritt ein planarer Anteil dieser Hilfsschicht (8) freigelegt und strukturiert wird,
bei dem in einem sechsten Schritt ganzflächig eine Schicht aus Polysilizium aufgebracht, für die Herstellung einer Elektrode (4) dotiert und bis auf einen verankerten Balken (2) entfernt wird und
bei dem in einem siebten Schritt die Hilfsschicht (8) entfernt wird.

4. Verfahren nach Anspruch 3 zur Herstellung eines Beschleunigungssensors nach Anspruch 2,
bei dem vor dem siebten Schritt ganzflächig eine weitere Hilfsschicht (10) aufgebracht und strukturiert wird,
dann ganzflächig die Polysiliziumschicht (5) aufgebracht, für die Herstellung einer Elektrode (4) dotiert und bis auf einen den Balken (2) überspannenden Anteil entfernt wird und
in dem siebten Schritt diese weitere Hilfsschicht (10) ebenfalls entfernt wird.

## Claims

1. Acceleration sensor on a silicon substrate (1) on which an electrically conductively doped polysilicon bar (2) is flexurally anchored, and on which, under this bar (2), an electrically conductively doped polysilicon spike (3), directed towards the bar (2), is arranged at such a small distance from the bar (2) that the tunnelling effect is introduced between this spike (3) and the bar (2), electrodes (4) being provided for electrostatic compensation of the inertial force acting on the bar (2).

2. Acceleration sensor according to Claim 1, in which the bar (2) is situated in a cavity enclosed by a polysilicon layer (5), and in which the electrodes (4) on the bar (2) and on this polysilicon layer (5) are designed in such a way as to be opposite one another.

3. Process for producing an acceleration sensor according to Claim 1,
in which, in a first step, a first polysilicon layer (6), followed by a second layer (7) of a different material, are applied to a silicon substrate (1) provided with structured doping,
in which, in a second step, these two layers (6, 7) are structured in such a way that,
in a third step, as a result of wet chemical undercut etching of the first layer (6), a spike (3) is left,
in which, in a fourth step, an auxiliary layer (8) and a planarizing layer (9) are applied over the entire surface,
in which, in a fifth step, a planar portion of this auxiliary layer (8) is bared and structured,
in which, in a sixth step, a polysilicon layer is applied over the entire surface, doped for producing an electrode (4) and removed until an anchored bar (2) is left, and
in which, in a seventh step, the auxiliary layer (8) is removed.

4. Process according to Claim 3 for producing an acceleration sensor according to Claim 2,
in which, before the seventh step, a further auxiliary layer (10) is applied over the entire surface and structured,
then the polysilicon layer (5) is applied over the entire surface, doped for producing an electrode (4) and removed until a portion spanning the bar (2) is left, and in the seventh step, this further auxiliary layer (10) is likewise removed.

## Revendications

1. Accéléromètre sur un substrat de silicium (1),
sur lequel une barre (2) en polysilicium dopée pour être électroconductrice est ancrée de manière à pouvoir plier et
sur lequel, sous cette barre (2), une pointe (3) en polysilicium dopée pour être électroconductrice et dirigée vers la barre (2) est située de manière contiguë à la barre (2), si près de celle-ci (2) que l'effet tunnel se produit entre cette pointe (3) et la barre (2),
des électrodes (4) étant prévues pour la compensation électrostatique de la force d'inertie s'exerçant sur la barre (2).

2. Accéléromètre selon la revendication 1,
dans lequel la barre (2) est située dans un espace creux entouré d'une couche de polysilicium (5) et
dans lequel les électrodes (4) sont exécutées l'une en face de l'autre sur la barre (2) et sur cette couche de polysilicium (5).

3. Procédé pour la fabrication d'un accéléromètre selon la revendication 1,
dans lequel, dans une première étape, une première couche (6) de polysilicium et, sur celle-ci, une seconde couche (7) faite d'un autre matériau sont appliquées sur un substrat de silicium (1) pourvu d'un dopage structuré,
dans lequel, dans une deuxième étape, ces deux couches (6, 7) sont structurées de manière à ce que,
dans une troisième étape, il reste une pointe (3) comme résultat d'une attaque chimique sous-jacente par voie humide de la première couche (6),
dans lequel, dans une quatrième étape, une couche auxiliaire (8) et une couche d'égalisation (9) sont appliquées sur toute la surface,
dans lequel, dans une cinquième étape, une partie plane de cette couche auxiliaire (8) est libérée et structurée,
dans lequel, dans une sixième étape, une couche de polysilicium est appliquée sur toute la surface, est dopée pour la fabrication d'une électrode (4) et est éliminée, à l'exception d'une barre (2) ancrée et
dans lequel, dans une septième étape, la couche auxiliaire (8) est éliminée.

4. Procédé selon la revendication 3 pour la fabrication d'un accéléromètre selon la revendication 2,
dans lequel, avant la septième étape, une autre couche auxiliaire (10) est appliquée et structurée sur toute la surface,
puis la couche de polysilicium (5) est appliquée sur toute la surface, dopée pour la fabrication d'une électrode (4) et éliminée, à l'exception d'une partie recouvrant la barre (2) et, dans la septième étape, cette autre couche auxiliaire (10) est également éliminée.
